# EUROPEAN PATENT SPECIFICATION

(11) **EP 1 876 385 B1**
(45) Date of publication and mention of the grant of the patent: **06.01.2010**
(21) Application number: 07020338.5
(22) Date of filing: 02.07.2004
(51) Int. Cl.: F21S 8/00, F21V 23/00, H05B 35/00

(54) **Lamp and bulb for illumination and ambiance lighting**
Lampe und Kolben zur Beleuchtung und Umgebungserhellung
Boîtier de lame fendue pour couteau rotatif à fonctionnement électrique

(30) Priority: 02.07.2003 US 483913 P
(43) Date of publication of application: 09.01.2008
(62) Divisional of application: 04756665.8
(73) Proprietor: S.C. Johnson & Son, Inc., Racine, WI 53403 (US)
(72) Inventor: Johnson, H. Fisk III, Racine, WI 53403 (US); Porchia, Jose, Greenfield, WI 53228 (US); Calpino, Barry T., Chicago, IL 60631 (US); Wolf, Jeffrey J., Racine, WI 53406 (US)
(74) Representative: Ruschke, Hans Edvard

(56) References cited:
- WO-A-02/062106
- DE-A- 10 011 077
- GB-A- 2 239 306
- US-A1- 2003 057 886
- US-A1- 2005 195 600

## Description

### BACKGROUND OF THE INVENTION

### Field of the Invention

Our invention relates to novel lighting devices which provide light for illumination as well as ambient light.

### Description of the Related Art

Electric lamps, and the light bulbs used therein, which provide illumination are well known and are widely used. These lamps and bulbs fall into two general categories, namely, incandescent and fluorescent. More recent developments in lighting have led to advancement in light emitting diodes (LEDs). An LED is a semiconductor device that emits visible light when an electrical current passes throught it. The light from an LED is basically monochromatic and the color of the light is determined by the particular material used in the semiconductor (although current applied to the LED can be used to vary the perceived color). LEDs have the advantage of low power requirements, high efficiency and long life. The outputs of several different color LEDs can be mixed so as to produce additional colors, including white light, and different brightness. LEDs can also be used to provide background lighting to achieve desired ambient effects. However, they have limited brightness and therefore they are generally not suitable for illumination purposes. Instead, LEDs have been generally used for such applications as indicator lights, panel backlighting and fiber optic data transmission.

U.S. Patent No. 6,149,283 discloses an LED lamp/bulb having a multicolor adjustor. This device comprises a base in which several LEDs capable of producing different colored light are mounted. Adjustable switches are provided for the different color LEDs so that the colors can be mixed in any desired ratio to produce desired lighting effects such as varying colors, including white light, and varying brightness. This patent acknowledges that the lumen output of LEDs is not as high as an incandescent source of the identical wattage:

U.S. Patent No. 5,924,784 discloses providing ambient light (simulating a candle flame) from both a free-standing lamp and an Edison-style light bulb (i.e., a screw-in bulb that mates with a conventional light bulb socket) using LEDs. The flame simulation is provided through both color combinations emitted and flicker effects. The patent states that it is directed to bulbs and lamps used for achieving soothing effects in memorials and the like.

U.S. Patents No. 6,016,038, No. 6,150,774, No. 6,166,496, No. 6,211,626, No. 6,292,901 and No. 6,340,868 disclose various techniques and electrical circuits for controlling the light output of several LEDs according to predetermined programs.

Document DE 100 11 077 shows a lamp in which two rings of LED's are set in the lamp holder, so as to shine up against the neck/shoulder of the light bulb. The outer ring contains 20 blue LED's and the inner ring contains 14 green LED's. The green LED's, when illuminated give the light bulb a green tinge. Similarly, when the blue LED's are active the light bulb has a blue tinge. The LED's and the lamp are controllable via a 3-channel remote control unit. A similar application for LED's is shown in document US 4,677,533, where rings of LED's surround a normal incandescent lamp for the purpose of giving the light a slight colored shade for the comfort of a reader. The lamp and two rings of LED's are individually controllable via variable resistors. In document WO 02/062106 on which the pre-characterizing part of claim 1 is based, there is shown a fluorescent lamp, which produces white light mounted on a base within a translucent housing. The lamp is surrounded by a plurality of LED's, which emit light from a different color. A control circuit provides the power supply for the bulb and the LED's. The assembly can be operated as a normal lamp by energizing the fluorescent lamp, or as night or orientation lamp by energizing only the LED. The entire assembly is adapted to fit a normal light bulb socket and be powered therefrom.

### SUMMARY OF THE INVENTION

This invention is defined in claim 1 below.

### BRIEF DESCRIPTION OF THE DRAWINGS

Figs. 1A and 1B are a cross-sectional and top view, respectively, of another bulb according to an embodiment of our invention.

Fig. 2 is a perspective view of another bulb according to another embodiment of our invention.

Fig. 3 is a side view of the bulb shown in Fig. 7.

Fig. 4 is a partially exploded view of the bulb shown in Figs. 8 and 9.

### DETAILED DESCRIPTION OF THE PREFERRED EMBODIMENT

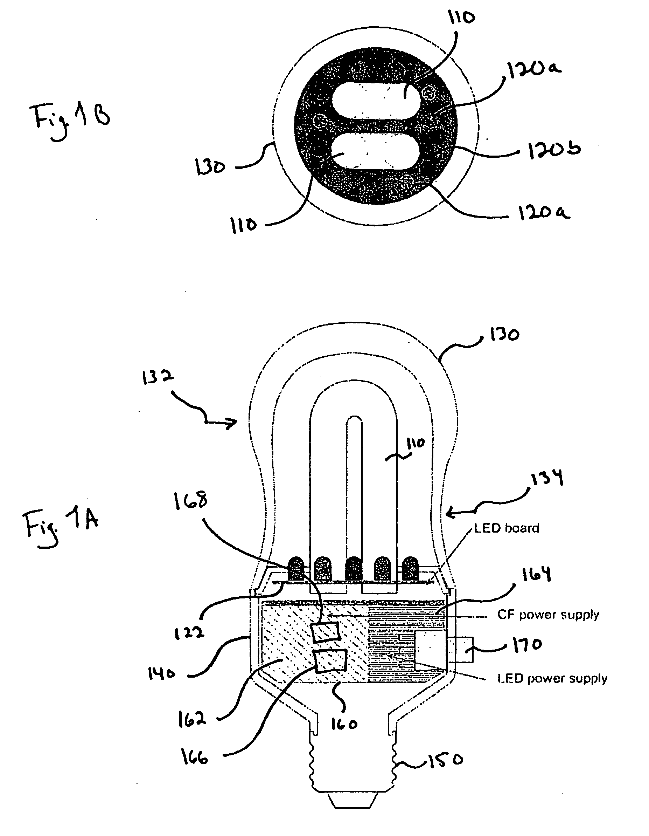

Figs. 1A and 1B show a bulb 100 which includes a base 140 having a screw-in connector 150 adapted to mate with a conventional incandescent light bulb socket in a lamp or the like. Of course, connector 150 may be of any one of a number of configurations that mate with other conventional light sockets (e.g., fluorescent, halogen, etc.).

Bulb 100 also includes a translucent housing 130. Housing 130 encloses bulbs 110. While other light emitting devices may be provided to provide the bright, white light associated with conventional light bulbs, it is preferred that compact fluorescent bulbs be used. (Of course, bulbs 110 may be replaceable light bulbs, or more permanently affixed light emitting devices.) In this embodiment, we will discuss a plurality of compact fluorescent bulbs which are provided to increase the power of the bulb 100 and the overall surface area within housing 130 emitting white light (or the like).

As is shown in Fig. 1A, compact fluorescent bulbs 110 are each formed in an upside down, substantially U-shaped configuration. (Of course, other arrangements are possible while keeping with the scope of our invention). In particular, a compact fluorescent bulb 110 may have a first electrode at one end from which it extends up in a direction away from base 140, until it bends back on itself near the top of housing 130, so as to extend back toward base 140 to a second electrode at the other end. Figs. 1A and 1B show two such bulbs 110.

Alternatively, compact fluorescent bulbs 110 can be formed of a single bulb that has a plurality of separate lengths, each of which extends up from the base 140 and then bends back on itself to extend back to base 140, with the lengths being interconnected so as to have only two electrodes, each at opposite ends of the total length. More specifically, while Figs. 1A and 6B appear to show two separate U-shaped bulbs, the term plurality of compact fluorescent bulbs used within this specification can refer to a single compact fluorescent bulb that is bent multiple times to have distinct lengths, as shown in Figs. 1A and 1B.

In a most preferred arrangement, the total length of the multiple compact fluorescent bulbs 110 is in the range of about 2 to about 21 inches, whether the compact fluorescent bulbs are actually distinct bulbs, or a single bulb having a plurality of distinct lengths. Preferably, this could include about 1 inch lengths, with one bend, to about 3.5 inch lengths, with 1 to 3 bends. This provides a high surface area of light emission to provide ample light to illuminate a room or the like. Also, it should be noted that any number of shapes and configurations may be used to form compact fluorescent bulbs 110 (or other bulbs), other than the U-shaped configuration shown in the figures. For instance, spiral or helical shapes may be used.

Bulb 100 also includes a plurality of LEDs 120. LEDs 120 are arranged on an LED board 122 so as to encircle the compact fluorescent bulbs 110. In addition, LEDs 120 include a number of different color LEDs. More specifically, as shown in this embodiment, the LEDs of different colors are arranged such that adjacent individual LEDs 120a and LEDs 120b are LEDs of different colors. With such a configuration, the different colored LEDs may be evenly spaced around the inside of housing 130 to provide a suitable light display when perceived from any side of bulb 100. As discussed above with respect to other embodiments, the LEDs may also be configured differently such that a grouping of different colored LEDs may be positioned close to each other (and optionally, covered by a light diffuser so that the group acts as a single pixel) to give increased control over the perception by a user of the colors to be emitted from housing 130. In such embodiments, LEDs 120 may be controlled to provide a more fluid, continuous change between different emitted colors (e.g., color wash). In the arrangement shown in Figs. 1A and 1B, the separation of differently colored LEDs 120a and 120b provides a more distinct and delineated change of colors, as perceived by user, in comparison with an embodiment in which a group of differently colored LEDs 120, are positioned close to each other so as to be perceived by user as a single pixel. Alternatively, the arrangement may include close groupings of LEDs, with individual LEDs or the grouping still being separately discernable.

LEDs 120, compact fluorescent bulbs 110 and LED board 122 are mounted on base 140, directly or indirectly. Base 140 includes a control circuit board 160 which includes LED power supply 164 and compact fluorescent bulb power supply 162. By providing power (and control) for these features on one board, a more compact bulb 100 is achieved. Board 160 may include conventional switches and potentiometers for controlling the functions of the LEDs 120 and fluorescent bulbs 110, as would be understood by one of ordinary skill in the art. Alternatively, separate boards may be provided for LEDs 120 and compact fluorescent bulbs 110. Electrical power is supplied to board 160 through its electrical connection (not shown) to connector 150, which receives power when mated with a conventional light socket.

Control board 160 may also include a processor 166 that may use various combinations of software and hardware to control the various lighting functions. With respect to LEDs 120, the control may involve control of the color to be emitted by LEDs 120, individually or as a group, when perceived by a user from outside of housing 130 (this may involve the use of a diffuser or the like). In addition, the control mechanisms may control the brightness of the LEDs 120. Further, the control may involve the running of predetermined lighting presentations (e.g., light shows) that vary the light color, brightness, activation, etc., over the course of the presentation to provide an entertaining lighting show. The control mechanisms may also control the compact fluorescent bulbs 110, including their brightness or activation. In preferred embodiments, the compact fluorescent bulbs 110 are activated on their own, without LEDs 120; to provide normal white light for illuminating a room or other area. The LEDs may be used separately as night lights or to provide ambience using color features or color shows that are pleasing to a user.

The light shows may be stored in a memory 168, which may also be included on the control board 160 (or integrated with processor 166). The memory 168 may include software programs for controlling the circuit board 160 and/or processor 166 to operate the predetermined presentations.

A user interface 170 is provided on base 140 so as to provide a user with control of the control board 160 and/or processor 166. The user interface may allow the user to select the colors, brightness, activation, etc. of the LEDs 120 and compact fluorescent bulbs 110. In the depicted embodiment, the user interface 170 is a button which a user can toggle to switch between different settings. In other embodiments, user interface 170 may be more elaborate (and be provided at base 140, or remote locations) so as to allow a user more sophisticated control of the operation of the bulb 100. This could include the ability to design programs including color changes, changes in brightness of various components, timed activations and/or deactivations, etc., and combinations thereof.

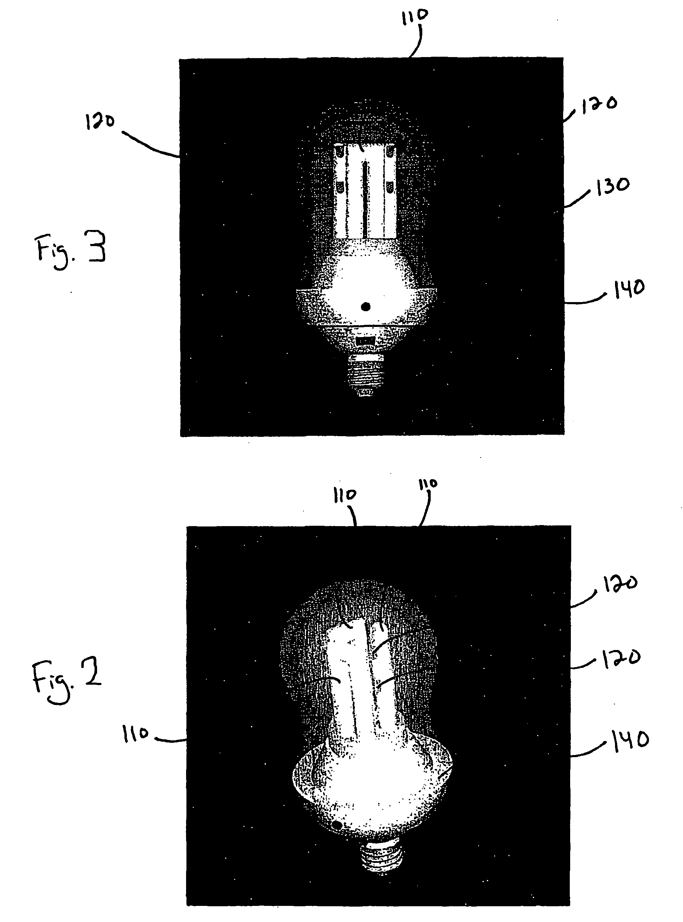

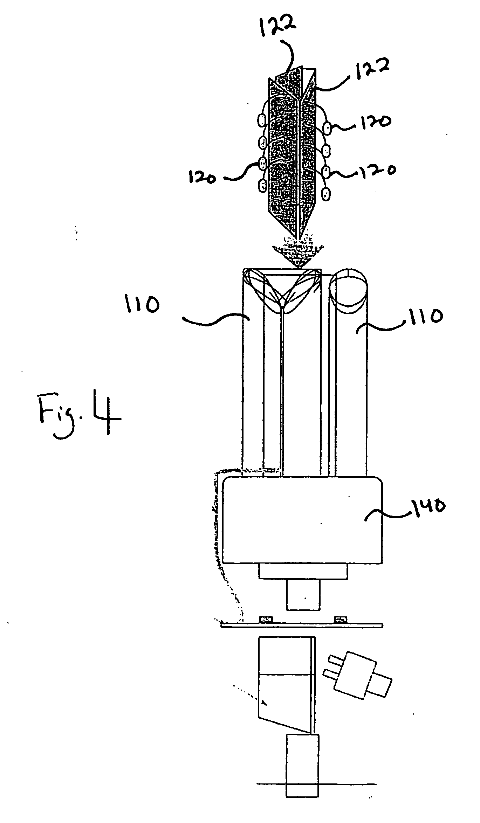

Figures 2-4 show a modification of the bulb shown in Figs. 1A and 1B which embodies the present invention. In paticular, there are provided three compact fluorescent bulbs 110 (which may include three distinct fluorescent bulbs or three distinct lengths of light emission of a single fluorescent bulb). Again, the separate compact fluorescent bulbs 110 are provided so as to extend from the base 140 vertically up through the housing 130 to a position near the top thereof. In this embodiment, however, LEDs 120 are not arranged circularly around the compact fluorescent bulbs 110 near the base 140, but are arranged in vertical groupings, each grouping extending between separate compact fluorescent bulbs 110. As shown in Fig. 4, each grouping of LEDs 120 extending between adjacent compact fluorescent bulbs 110 may be secured to a separate LED board 122. This provides a slightly different lighting effect that may distribute colored light more effectively.

With the above-described various embodiments, our invention provides a bulb similar in size, shape and compatibility to conventional light bulbs, but with enhanced features and control, including colors, color changing and light shows. However, because our invention still mates with conventional light sockets, and is generally shaped similarly to that of a conventional incandescent bulb (at least in one embodiment), it may be used in existing light fixtures and accommodate conventional light shades. Specifically, housing 130 is preferably shaped/sized so as to be able to receive the connection means provided on conventional light shades to secure ' the same to typical light bulbs. In particular, with respect to Fig. 1A the diameter of housing 130 at position 132 (a wider top portion of housing 130) is preferably in the range of about 44.45mm (1.75 inches to about 82.55 mm (3.25 inches), and the diameter of housing 130 at position 134 is preferably about 25.4 mm (1 inch) to about 76.2 mm (3 inches). Most preferably the of the bulb substantially complies with conventional bulb sizes A-19 (with position 132 measuring about 60.3 mm (2.375 inches)) and A-21 (with position 132 measuring about 66.675 mm (2.625 inches)).

In addition, bulb 100 preferably emits white light from compact fluorescent bulbs, or other light emission devices in a range of about 160 to about 4200 lumens; and more preferably in the range of about 240 to about 2625 lumens; and most preferably in the range of about 320 to about 2100 lumens. Also, a bulb according to our invention preferably draws power in the range of about 5 to about 200 watts; and more preferably in a range of about 15 to about 125 watts; and most preferably in a range of about 25 to about 100 watts. Consequently, our invention is designed for use in many settings where conventional bulbs would typically be used.

It should also be recognized, however, that other suitable illumination sources, such as a halogen bulb or high intensity discharge bulb, may be used to provide illumination light, as would be readily understood by one of ordinary skill in the art.

### INDUSTRIAL APPLICABILITY

This invention provides lighting for both illumination purposes and for the creation of desired ambient conditions in a single device, which may be adjusted manually to change the lighting and which may be programmed to automatically change such lighting.

## Claims

1. A light device (100) comprising:
an illumination source (110) emitting illumination light when supplied with electrical power;
a plurality of light emitting diodes (LED's) (120) emitting light when supplied with electrical power;
a base supporting the illumination source (110); and
circuitry connecting a supply of electrical power to the illumination source (110) and the LED's (120);
**characterized in that** said illumination source (110) comprises either:
i) three distinct fluorescent bulbs (110) with the LED's (120) arranged in vertical groupings each grouping extending between separate compact fluorescent bulbs (110), or
ii) three distinct lengths of light emission of a single fluorescent bulb with the LED's (120) arranged in vertical groupings, each grouping extending between lengths of light emission of the single bulb.

2. A light device according to claim 1, wherein each grouping of LED's (120) is secured to a separate board (122).

3. A light device according to claims 1 or 2, wherein the circuitry is configured to adjust the intensities of the light emitted by the LED's (120) according to predetermined programs to provide light shows.

4. A light device according to claim 3, further including a memory (168) storing said light shows.

5. A light device according to claim 4, further including a processor (166) wherein the memory includes software for controlling the processor (166) to operate the light shows.

6. A light device according to claim 4, wherein the memory (168) is integrated with the processor (166).

7. A light device according to any preceding claim, further comprising a dimmer to adjust the intensity of the illumination light.

8. A light device according to claim 7, further comprising a sensor for sensing at least one of temperature, scent, motion, and sound, the circuit adjusting at least one of the intensities of the light emitted by the LED's or illumination source in response to a signal from the sensor.

9. A light device according to any of claims 1-6, wherein the circuitry is configured to provide a mode of operation in which the illumination source is activated on its own without the LED's and a mode of operation in which the LED's are used separately.

## Patentansprüche

1. Leuchtmittel (100), mit:
einer Lichtquelle (110), die Beleuchtungslicht emittiert, wenn sie mit elektrischem Strom versorgt wird;
einer Vielzahl von Leuchtdioden (LEDs) (120), die Licht emittieren, wenn sie mit elektrischem Strom versorgt werden;
einer Basis, die die Lichtquelle (110) trägt; und mit
einer Schaltung, die eine elektrische Stromversorgung mit der Lichtquelle (110) und den LEDs (120) verbindet;
**dadurch gekennzeichnet, dass** die Lichtquelle (110) aufweist:
entweder
i) drei eigenständige Leuchtstofflampen (110) mit den LEDs (120), die in vertikalen Gruppierungen angeordnet sind, wobei sich jede Gruppierung zwischen separaten kompakten Leuchtstofflampen (110) erstreckt,
oder
ii) drei eigenständige Lichtemissionslängen einer einzelnen Leuchtstofflampe mit den in vertikalen Gruppierungen angeordneten LEDs (120), wobei jede Gruppierung sich zwischen den Lichtemissionlängen der einzelnen Lampe erstreckt.

2. Leuchtmittel nach Anspruch 1, bei dem jede Gruppierung von LEDs (120) an einer separaten Platine (122) befestigt ist.

3. Leuchtmittel nach Anspruch 1 oder 2, bei dem die Schaltung ausgebildet ist, die Intensitäten des von den LEDs emittierten Lichts entsprechend vorbestimmten Programmen einzustellen (120), um Lichtshows bereitzustellen.

4. Leuchtmittel nach Anspruch 3, das weiterhin einen Speicher (168) umfasst, der die Lichtshows speichert.

5. Leuchtmittel nach Anspruch 4, das weiterhin einen Prozessor (166) umfasst, wobei der Speicher Software zur Steuerung des Prozessors (166) umfasst, um die Lichtshows zu betreiben.

6. Leuchtmittel nach Anspruch 4, bei dem der Speicher (168) in den Prozessor (166) integriert ist.

7. Leuchtmittel nach einem der vorhergehenden Ansprüche, das weiterhin einen Dimmer umfasst, um die Intensität des Beleuchtungslichts einzustellen.

8. Leuchtmittel nach Anspruch 7, das weiterhin einen Sensor zum Erfassen von mindestens einer der folgenden Zustandsgrößen umfasst, nämlich Temperatur, Duft, Bewegung und Schall, wobei die Schaltung mindestens eine der Intensitäten des von den LEDs emittierten Lichts und/oder die Lichtquelle ansprechend auf ein Signal des Sensors einstellt.

9. Leuchtmittel nach einem der Ansprüche 1-6, bei dem die Schaltung ausgebildet ist, eine Betriebsart, bei der die Lichtquelle alleine ohne die LEDs aktiviert wird, und eine Betriebsart bereitzustellen, bei der die LEDs einzeln verwendet werden.

## Revendications

1. Dispositif d'éclairage (100) comprenant :
une source d'éclairage (110) émettant une lumière d'éclairage lorsqu'elle est alimentée en énergie électrique ;
une pluralité de diodes électroluminescentes (DEL) (120) émettant de la lumière lorsqu'elles sont alimentées en énergie électrique ;
une base supportant la source d'éclairage (110) ; et
des éléments de circuit connectant une alimentation en énergie électrique à la source d'éclairage (110) et aux DEL (120) ;
**caractérisé en ce que** ladite source d'éclairage (110) comprend soit :
i) trois ampoules fluorescentes (110) distinctes avec les DEL (120) agencées en groupements verticaux, chaque groupement s'étendant entre des ampoules fluorescentes (110) compactes séparées, soit
ii) trois longueurs distinctes d'émission de lumière d'une ampoule fluorescente unique avec les DEL (120) agencées en groupements verticaux, chaque groupement s'étendant entre des longueurs d'émission de lumière de l'ampoule unique.

2. Dispositif d'éclairage selon la revendication 1, dans lequel chaque groupement de DEL (120) est fixé à un panneau (122) séparé.

3. Dispositif d'éclairage selon la revendication 1 ou 2, dans lequel les éléments de circuit sont configurés pour ajuster les intensités de la lumière émise par les DEL (120) selon des programmes prédéterminés pour réaliser des jeux de lumière.

4. Dispositif d'éclairage selon la revendication 3, comprenant en outre une mémoire (168) mémorisant lesdits jeux de lumière.

5. Dispositif d'éclairage selon la revendication 4, comprenant en outre un processeur (166), dans lequel la mémoire comprend un logiciel pour commander le processeur (166) pour mettre en oeuvre les jeux de lumière.

6. Dispositif d'éclairage selon la revendication 4, dans lequel la mémoire (168) est intégrée avec le processeur (166).

7. Dispositif d'éclairage selon l'une quelconque des revendications précédentes, comprenant en outre un variateur pour ajuster l'intensité de la lumière d'éclairage.

8. Dispositif d'éclairage selon la revendication 7, comprenant en outre un capteur pour détecter au moins l'un d'une température, d'un parfum, d'un mouvement et d'un son, le circuit ajustant au moins l'une des intensités de la lumière émise par les DEL ou de la source d'éclairage en réponse à un signal provenant du capteur.

9. Dispositif d'éclairage selon l'une quelconque des revendications 1 à 6, dans lequel les éléments de circuit sont configurés pour fournir un mode de fonctionnement dans lequel la source d'éclairage est activée toute seule sans les DEL et un mode de fonctionnement dans lequel les DEL sont utilisées séparément.
